# EUROPEAN PATENT SPECIFICATION

(11) **EP 4 543 753 B1**
(45) Date of publication and mention of the grant of the patent: **04.11.2026**
(21) Application number: 23782682.1
(22) Date of filing: 07.09.2023
(51) Int. Cl.: B64C 25/24, B64C 25/26

(54) **GEAR DISCONNECT MECHANISM FOR LANDING GEAR ACTUATOR EMERGENCY DEPLOYMENT**
ENTKUPPLUNGSMECHANISMUS FÜR EINEN FAHRWERKAKTUATOR ZUM AUSFAHREN IM NOTFALL
MÉCANISME DE DÉCOUPLAGE D'UN ACTIONNEUR POUR ATTERRISSEUR POUR EXTENSION D'URGENCE

(43) Date of publication of application: 30.04.2025
(73) Proprietor: Woodward, Inc., Fort Collins, Colorado 80524 (US)
(72) Inventor: LATIF, Rana Kamran, Grand-Prairie, Texas 75052 (US)
(74) Representative: Gevers Patents
(86) International application number: PCT/US2023/032213
(87) International publication number: WO 2025/053847

(56) References cited:
- EP-A1- 3 403 928
- WO-A1-2016/014676
- US-A- 2 476 376

## Description

### BACKGROUND

An aircraft landing gear assembly is generally movable between a deployed (extended) condition, for take off, landing, and taxiing, and a stowed (retracted) condition for flight.

An actuator may be provided for moving the landing gear assembly between the deployed and stowed conditions. This type of actuator is known in the art as a "retraction actuator." A retraction actuator may have one end coupled to the airframe and another end coupled to the main strut such that extension and retraction of the actuator results in movement of the main strut between deployed and stowed conditions.

Landing gear actuators are required to have an emergency deployment mechanism in case of a system failure such as power loss. Under such failure, the landing gear shall be able to deploy under gravitational force. Hydraulic actuators achieve this function by means of hydraulic pressure release, which allows the system to backdrive and deploy the landing gear. However, for electromechanical actuators, the backdriving of the actuator requires larger external force due to inherent system drag. Document EP 3 403 928 A1 discloses an electromechanical actuator for a landing gear.

The present disclosure provides embodiments of disconnect mechanisms suitable for use with landing gear assemblies having electromechanical actuators. Disclosed embodiments include a ball screw driven by an electric motor through a gear train. The disconnect mechanisms selectively isolate the gear train output from the ball screw to reduce inherent system drag so that the landing gear can deploy under gravitational forces.

### SUMMARY

Embodiments of landing gear disconnect mechanisms are set forth below according to technologies and methodologies of the present disclosure. The disconnect mechanisms are configured such that in the event of a system failure, the actuator can be put in a disconnected state to reduce inherent system drag so that the landing gear can deploy under the force of gravity.

A first representative embodiment of a landing gear system for an aircraft landing gear includes a main beam coupled to the aircraft for reciprocating movement between a stowed position and a deployed position. An actuator is configured to drive the reciprocating movement of the main beam. The actuator includes a ball screw and a motor. The motor has an output shaft operably coupled to the ball screw through the gear train and configured to drive selective rotation of the ball screw. The actuator further includes a disconnect mechanism with a disconnect fitting rotatably mounted to the ball screw. A biasing fitting engages the disconnect fitting to rotate the disconnect fitting between a first position and a second position. The disconnect fitting transfers rotation of the output gear shaft to the ball screw when the disconnect fitting is in the first position. The ball screw is isolated from the output gear shaft when the disconnect fitting is in the second position.

In any embodiment, the motor drives rotation of a gear having a splined surface, and the disconnect fitting includes an engagement element disposed on an elongate member, wherein rotation of the disconnect fitting engages and disengages the engagement element from the splined surface.

In any embodiment, the elongate member has a first end and a second end, the first end and the second end defining an angle therebetween.

In any embodiment, the angle is between 100° and 150°.

In any embodiment, the biasing fitting is configured for sliding translation along a centerline of the ball screw between a connection position and an isolation position, wherein translation of the biasing fitting from the isolation position to the connection position engages the biasing fitting with the first end of the elongate member to rotate the disconnect fitting.

In any embodiment, engagement of the biasing fitting with the elongate member when the biasing fitting is in the connection position maintains engagement of the engagement element with the splined surface.

In any embodiment, translation of the biasing fitting from the connection position to the isolation position engages the biasing fitting with the second end of the elongate member to rotate the disconnect fitting.

In any embodiment, engagement of the biasing fitting with the second end of the elongate member when the biasing fitting is in the isolation position prevents engagement of the engagement element with the splined surface.

In any embodiment, the biasing fitting has an ovoid shape.

In any embodiment, the biasing fitting is coupled to a first end of a rod slidingly disposed within the ball screw for translational movement along the centerline of the ball screw.

In any embodiment, an actuation element is coupled to a second end of the rod, the actuation element being configured to move the biasing fitting from the connection position to the isolation position.

In any embodiment, the actuation element is a cable.

In any embodiment, the disconnect mechanism further comprises a biasing element urging the biasing fitting toward the connection position.

In any embodiment, the disconnect mechanism further comprises a locking feature configured to resist the biasing element to maintain the biasing fitting in the isolated position.

In any embodiment, the locking feature comprises a locking fitting slidably received within an aperture formed in the rod when the biasing fitting is in the isolated position.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 shows a front elevational view of an exemplary embodiment of a landing gear assembly for an aircraft according to aspects of the present disclosure, wherein the landing gear assembly is in a stowed position;
FIGURE 2 shows a front elevational view thereof, wherein the landing gear assembly is in a deployed position;
FIGURE 3 shows a schematic partial view of the landing gear assembly of FIGURE 1, wherein a disconnect mechanism is in a connected state;
FIGURE 4 shows a partial schematic view thereof, wherein the disconnect mechanism is in a disconnected state;
FIGURE 5 shows a schematic view of the disconnect mechanism of FIGURE 3; and
FIGURE 6 shows a schematic view of the disconnect mechanism of FIGURE 4.

### DETAILED DESCRIPTION

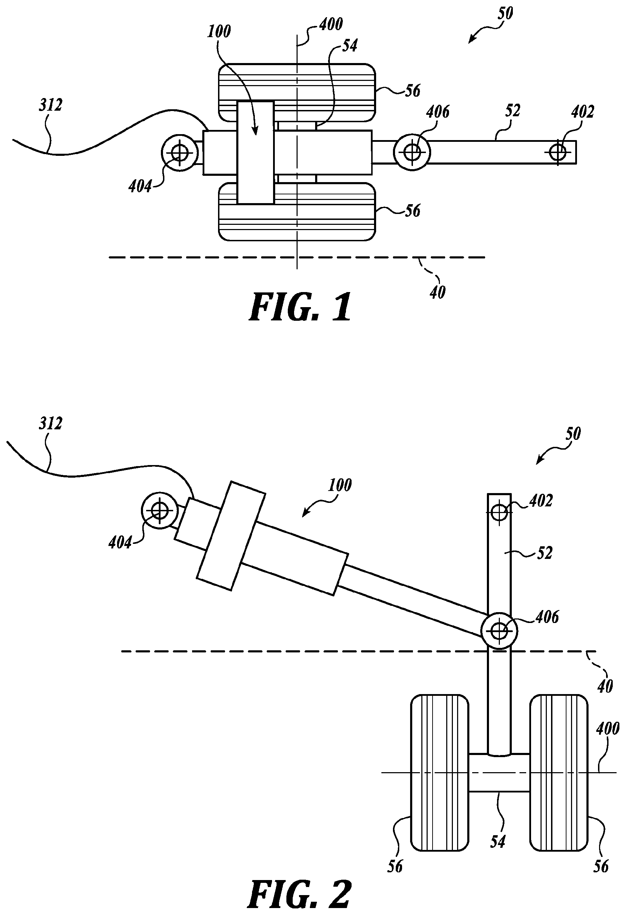

Referring to FIGURES 1 and 2, a retractable landing gear assembly 50 for an aircraft 40 according to aspects of the present disclosure is shown. The landing gear assembly 50 includes a main beam 52 coupled to the aircraft 40 for reciprocal movement between the stowed position of FIGURE 1 and the deployed position of FIGURE 2. In the illustrated embodiment, one end of the main beam 52 is rotatably coupled to the aircraft 40 about an axis 402. An axle 54 is disposed on the other end of the main beam 52 and has a pair of wheels rotatably mounted thereto about an axis 400. When the aircraft 40 is on the ground, i.e., during takeoff, landing, and taxiing, the landing gear assembly 50 is in the extended position, and the wheels 56 rollingly engage the ground to support the aircraft. When the aircraft 40 is in flight, the landing gear assembly 50 is retracted upward into the aircraft to reduce drag.

The landing gear assembly 50 includes an actuator 100 that drives the main beam 52 through extension and retraction motions. In the illustrated embodiment, the actuator 100 is a linear actuator rotatably coupled about an axis 404 at one end to the aircraft 40. The other end of the actuator 100 is rotatably coupled about an axis 406 to the main beam 52 of the landing gear assembly 50. Extension of the actuator drives the landing gear assembly 40 toward the deployed position and retraction of the actuator drives the landing gear assembly toward the stowed position.

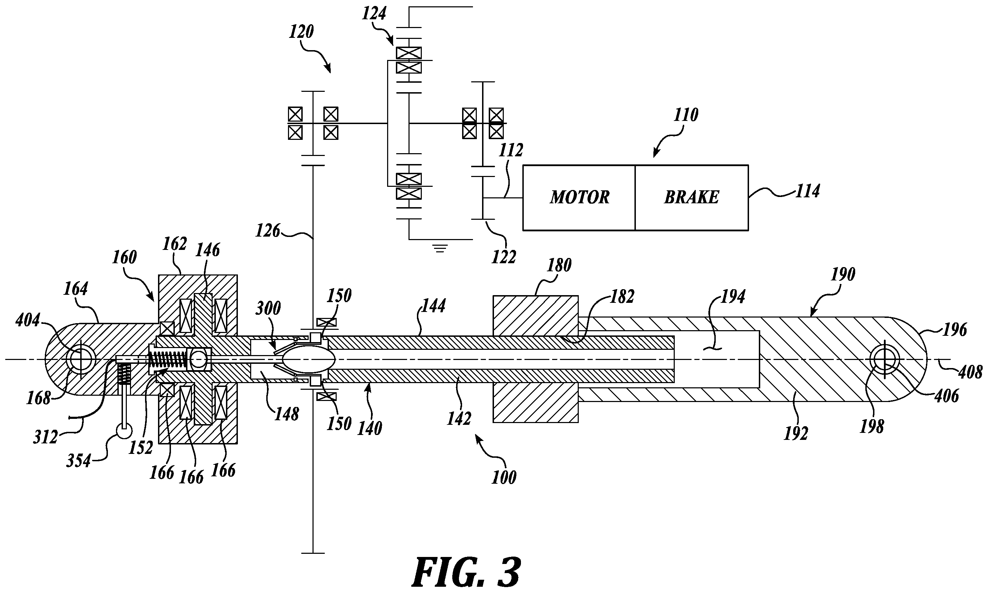

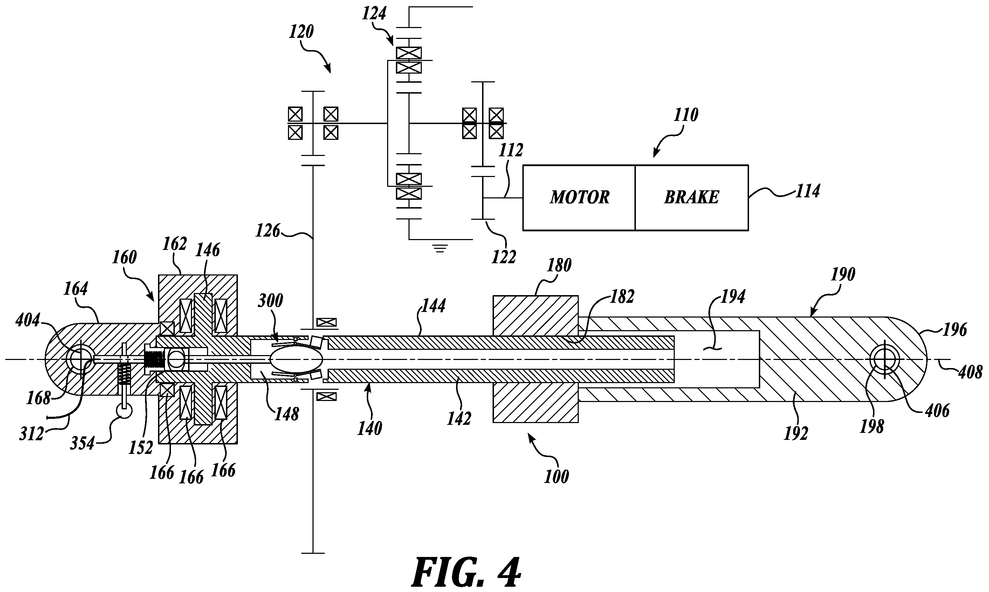

Referring now to FIGURES 3 and 4, an exemplary embodiment of the linear actuator 100 according to aspects of the present disclosure will be described. In the illustrated embodiment, the actuator 100 is a ball screw actuator that includes a ball screw 140 in threaded engagement with a ball nut 180. The ball screw 140 is selectively rotatable about a centerline 408, and the ball nut 180 is fixed in rotation about the central axis. Accordingly, rotation of the ball screw 140 in a first direction drives the ball nut 180 in a first linear direction, and rotation of the ball screw in a second direction drives the ball nut in a second linear direction.

The ball screw 140 is a known ball screw having an elongate body 142 with external threads 144 formed thereon. One end of the ball screw 140 is mounted to a ball screw fitting 160. As shown in FIGURES 3 and 4, a radial flange 146 extends from the end of the body 142 of ball screw 140. A plurality of bearings 166 is mounted within a body 162 of the ball screw fitting 160 and engages the body 142 and flange 146 of the ball screw 140 to allow rotation of the ball screw about the centerline 408 relative to the ball screw fitting, while restraining translation of the ball screw 140 relative to the ball screw fitting 160 along the centerline 408.

The ball screw fitting 160 includes a lug 164 extending from the body 162. In the illustrated embodiment, the lug 164 has bushed hole 168 formed therein so that the ball screw fitting 160 can be rotatably coupled to the aircraft about axis 404. In any embodiment, the hole 168 has a spherical bearing mounted therein to provide pivotal mounting of the ball screw fitting 160 to the aircraft. In any embodiment, the ball screw fitting 160 is rotatably or pivotally coupled to the aircraft in any suitable matter.

Still referring to FIGURES 3 and 4, the ball nut 180 is fixedly mounted to a ball nut fitting 190. The ball nut fitting 190 has an elongate body 192 with a cavity 194 formed at the end to which the ball nut 180 is mounted. The cavity is sized and configured to receive at least a portion of the ball screw 140 during extension and retraction of the actuator 100.

A lug 196 is formed on the ball nut fitting 190 opposite to the ball nut 180. In the illustrated embodiment, the lug 196 has bushed hole 198 formed therein so that the ball nut fitting can be rotatably coupled to the main beam 52 about an axis 406. In any embodiment, the hole 198 has a spherical bearing mounted therein to provide pivotal mounting of the ball nut fitting 190 to the main beam. In any embodiment, the ball nut fitting 190 is rotatably or pivotally coupled to the main beam in any suitable matter.

The linear actuator 100 includes a motor 110 connected to the ball screw 140 by a transmission 120 and a disconnect mechanism 300. As will be described in further detail, the motor 110 selectively drives rotation of the ball screw 140. The motor 110 includes an output shaft 112 selectively rotatable in a first direction and a second direction. In any embodiment, motor 110 is an electric motor. In any embodiment, the motor 110 may include a brake 114. In any embodiment, the motor is any motor suitable for providing a rotational force to drive actuation of an actuator.

The output shaft 112 of the motor 110 is coupled to the ball screw 140 by a transmission 120 such that rotation of the output shaft 112 in first and second directions drives rotation of the ball screw 140 in first and second directions, respectively, about the centerline 408 of the ball screw. In any embodiment, the transmission 120 is configured such that rotation of the output shaft 112 drives rotation of the ball screw 140 in the same direction as the output shaft. In any embodiment, the transmission 120 is configured such that rotation of the output shaft 112 drives rotation of the ball screw 140 in a direction opposite the direction of the output shaft.

The transmission 120 includes an input gear 122 coupled to the output shaft 112 of the motor 110 and an output gear 126 that selectively engages ball screw 140. In the illustrated embodiment, the input gear 122 and the output gear 126 are connected by a planetary gear assembly 124. In any embodiment, the transmission 120 transforms the input torque and rotational speed provided by the motor 110 to the input gear 122 into a suitable output torque and rotational speed provided by the output gear 126 to the ball screw 140.

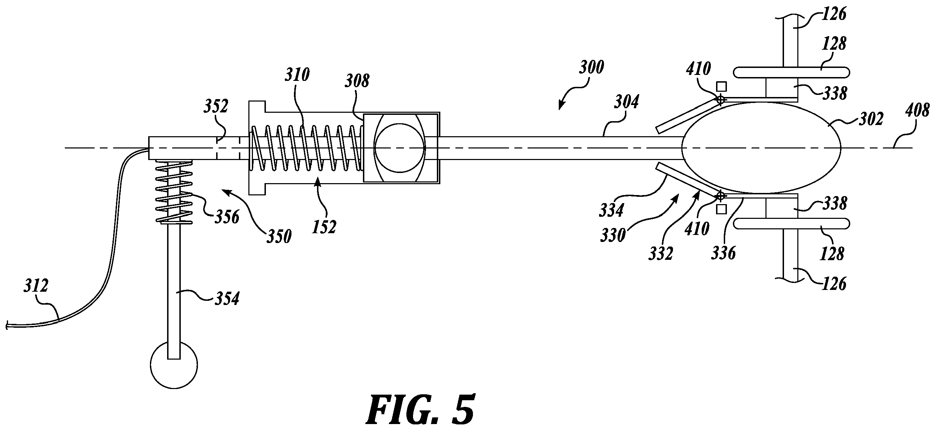

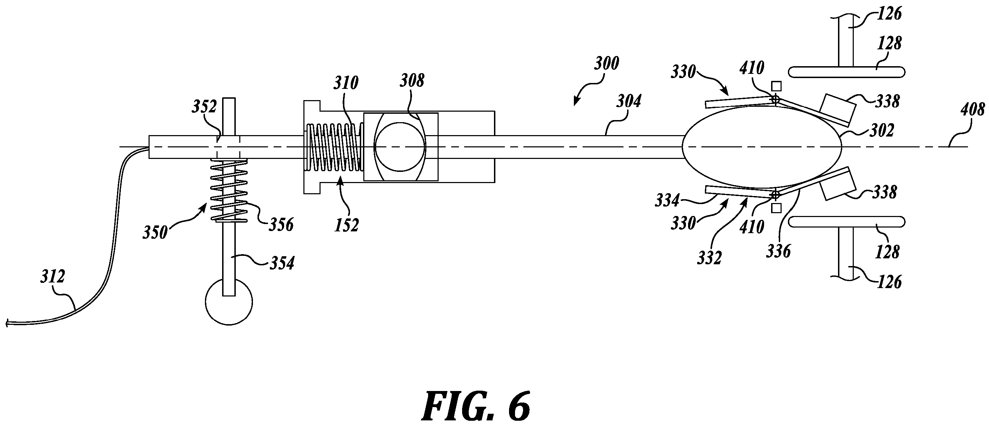

The ball screw 140 includes a disconnect mechanism 300 that selectively moves between a connected state, shown in FIGURES 3 and 5, and a disconnected state, shown in FIGURES 4 and 6. In the connected state, the disconnect mechanism 300 engages the output gear 126 of the transmission 120 so that rotation of the output shaft 112 of the motor 110 drives rotation of the ball screw 140. When the disconnect mechanism 300 is in the disconnected state, the disconnect mechanism is disengaged from the output gear 126 of the transmission 120 so that the ball screw 140 is isolated from the transmission 120 and the ball screw 140 is rotatable independent of the output shaft 112 of the motor 110.

Referring now to FIGURES 3-6, the disconnect mechanism 300 will now be described. The disconnect mechanism 300 includes a biasing fitting 302 and one or more disconnect fittings 330 dispose within a cavity 148 formed within the body 142 of the ball screw 140. The one or more disconnect fittings 330 are positioned circumferentially around the centerline 408 of the ball screw. As best shown in FIGURES 5 and 6, each disconnect fitting 330 includes an arm 332 rotatably coupled to the ball screw 140 about an axis 410. In any embodiment, the disconnect mechanism 300 includes four disconnect fittings 330 spaced evenly about the centerline 408 of the ball screw 140. In any embodiment, the disconnect mechanism 300 includes any suitable number of disconnect fittings 330 positioned in any suitable configuration within the cavity 148 of the ball screw 140.

Each arm 332 includes a first end 334 and a second end 336 forming an angle. In the illustrated embodiment, the angle is approximately 135°. In any embodiment, the angle is between 130° and 140°, between 100° and 150°, or of any other suitable value. In the illustrated embodiment, the axis 408 about which the arm 332 rotates is located at the vertex of the angle. In any embodiment, the axis may be located on the first end 334 or the second end 336 of the arm 332 so that the vertex of the angle is offset from.

Each disconnect fitting 330 has an engagement element 338 positioned on the second end 336. The engagement element 330 is sized and configured to extend through a corresponding aperture 150 formed in the body 142 of the ball screw 140 when the disconnect mechanism 300 is in the connected state. In the illustrated embodiment, each engagement element 338 includes one or more splines. As shown in FIGURE 5, when the disconnect mechanism 300 is in the connected state, the engagement elements 338 cooperate to form an external splined surface on the ball screw 140 that engages an internal splined surface 128 formed on the output gear 126 of the transmission 120. With the engagement elements 338 engaged with the splined surface 330 of the output gear, rotation of the output gear 126, which is driven by the motor, drives rotation of the ball screw 140.

When the disconnect mechanism 300 is in the disconnected state, as shown in FIGURE 6, the engagement elements 338 are disengaged from the internal splined surface 128 of the output gear 126 of the transmission 120. With the engagement elements 338 disengaged from the output gear 126, the ball screw 140 is isolated from the motor 110 and is free to backdrive unrestrained by the motor.

The disconnect mechanism 300 includes a biasing fitting 302 located within the cavity 148 and engaging the disconnect fittings 330. The biasing fitting 302 is mounted to one end of a rod 304 that is disposed within the ball screw 140 for sliding movement along the centerline 408 of the ball screw 140. A second end of the rod 304 extends through a recess 152 formed in an end of the ball screw 140 proximate to the ball screw fitting 160. In the illustrated embodiment, the biasing fitting 302 has an ovate shape. In any embodiment, the biasing fitting 302 has a spherical shape, a cylindrical shape, or any other suitable shape.

Referring to FIGURES 5 and 6, a ball housing 308 is slidingly disposed within the recess 152 and fixedly secured to the rod 304. A biasing element 310 is disposed within the recess 152 and engages the ball housing 308 to urge the biasing element in the direction of the biasing fitting 302. In any embodiment, the biasing element 310 is a compression spring configured to urge the ball housing 308 in the direction of the biasing fitting 302. In any embodiment, the biasing element is a tension spring, a gas spring, a torsional spring, or any other suitable biasing element configured to urge the ball housing 308 in the direction of the biasing fitting 302.

The disconnect mechanism 300 further includes an actuation element 312 configured to selectively drive the biasing fitting 302 toward the cavity 148, i.e., from its position when the disconnect mechanism 300 is in the connected state (shown in FIGURE 5) to its position when the disconnect mechanism 300 is in the disconnected state (shown in FIGURE 6). In any embodiment, the actuation element 312 is a cable connected at one end to the rod 304 and another end to a lever accessible from within the aircraft, such as within the cockpit. When the lever is pulled, the cable pulls the rod 304 and biasing fitting 302 to the left as shown in FIGURES 5 and 6, i.e., against the biasing force of the biasing element 310. In any embodiment, the actuation element may be an electric actuator (such as a solenoid) or a hydraulic actuator configured to drive the rod 304 and the biasing fitting 302 against the biasing force of the biasing element 310. In any embodiment, the actuation element is any suitable element that is configured to drive the rod 304 and the biasing fitting 302 against the biasing force of the biasing element 310, manually or automatically.

After the actuation element 312 moves the rod 304 and biasing fitting 302 to the position shown in FIGURE 6, a locking feature 350 engages the rod 304 to maintain the rod and biasing fitting in position. That is, the locking feature 350 maintains the disconnect mechanism in the disconnected state when the biasing fitting 302 has reached the isolation position.

In the illustrated embodiment, the locking feature 350 includes a locking fitting 354 slidably mounted perpendicular to the centerline 408 of the rod 304. A biasing element 356 is configured to urge an end of the locking fitting 354 to maintain sliding contact with the rod. As shown in FIGURE 5, an aperture 352 is formed in the rod 304 and is sized and configured to receive a portion of the locking fitting 354 when the disconnect mechanism 300 is in the disconnected state of FIGURE 6. To move the disconnect fitting 300 back to the connected state of FIGURE 5, the locking fitting 354 is disengaged from the aperture 352, after which the biasing element 310 drives the ball housing 308, rod 304, and biasing fitting 302 back to the connected position.

In the illustrated embodiment, the locking fitting 354 is a rod, and the biasing element 356 is a compression spring. In any embodiment, the locking fitting 354 is a latch. In any embodiment, the locking fitting 354 is a ratchet and pawl combination. In any embodiment, the biasing element is a compression spring, a tension spring, a torsion spring, or any other suitable element configured to apply a biasing force to the locking fitting. In any embodiment the locking feature is any suitable configuration that releasably secures the disconnect mechanism 300 in the engaged state.

Embodiments of the disclosed disconnect mechanism 300 enable a landing gear assembly 50 to be manually deployed in the event of a drive system failure. Under normal operating conditions, the disconnect mechanism 300 is in the connected state of FIGURES 3 and 5. With the disconnect mechanism 300 is in the connected state, the motor 110 is operatively connected to the ball screw 140 so that the actuator 100 can drive the landing gear assembly 50 through the extension and retraction motions.

When the disconnect mechanism 300 is in the connected state, the biasing fitting 302 engages the second end 336 of the arm 332 so that each engagement element 338 extends through the corresponding aperture 150 in the ball screw 140 to maintain engagement with the splined surface 128 of the output gear 126 of the transmission 120. Thus, when the disconnect mechanism 300 is in the connected state, rotation of the ball screw 140 is restrained by the output shaft 112 of the motor 110.

In the event of a system failure that prevents extension of the landing gear assembly 50, the disconnect mechanism 300 can be moved to the disconnected state of FIGURES 4 and 6, which allows the landing gear assembly to extend under the force of gravity. To move the disconnect mechanism 300 from the connected state of FIGURES 3 and 5 to the disconnected, a user activates the actuation element 312. In the illustrated embodiment, activating the actuation element 312 comprises pulling on the cable.

Activating the actuation element 312 drives the biasing fitting 302, the rod 304, and the ball housing 308 against the force of the biasing element 310, i.e., to the left as shown in FIGURES 3-6, until the locking feature 350 engages to lock the rod 304 in position. As the biasing fitting 302 moves to the left, the biasing fitting engages the first end 334 of each arm 332 of the disconnect fitting 330, which rotates each arm about its respective axis 410. The rotation of the arms 332 moves the second end 336 of each arm and, therefore, the corresponding engagement element 338, away from the splined surface 128 of the output gear 126 until the disconnect fitting 330 is isolated from the output gear 126.

With the locking feature engaged, the biasing fitting 302, the rod 304, and the ball housing 308 are prevented from translation in either direction along the centerline 408 of the ball screw 140, and the disconnect fitting 330 is locked in the disengaged state. Because the ball screw 140 is isolated from the transmission 120 and the motor 110, the ball screw 140 is free to backdrive under an external load. More specifically, the weight of the landing gear assembly 50 urges the landing gear assembly toward the deployed position, and the ball screw 140, unrestrained by the motor, backdrives until the landing gear assembly 50 reaches the deployed position.

When the landing gear reaches the deployed position, the user may disengage the locking fitting 350. With the locking fitting 350 disengaged, the biasing fitting 302, the rod 304, and the ball housing 308 return to the connected state of FIGURES 3 and 5. In the connected state, the ball screw 140 is again connected to the motor 110 through the transmission 120, and the motor provides resistance against rotation of the balls screw 140, thereby assisting the landing gear downlocks to lock the landing gear in the deployed position.

While illustrative embodiments have been illustrated and described, it will be appreciated that various changes can be made therein.

It will be appreciated that the disclosed embodiments are exemplary only and should not be considered limiting. In some embodiments, landing gear configuration, motor, and transmission can vary within the scope of the present disclosure. These and other variations are contemplated and should be considered within the scope of the present disclosure.

The present application may reference quantities and numbers. Unless specifically stated, such quantities and numbers are not to be considered restrictive, but exemplary of the possible quantities or numbers associated with the present application. Also, in this regard, the present application may use the term "plurality" to reference a quantity or number. In this regard, the term "plurality" is meant to be any number that is more than one, for example, two, three, four, five, etc. The terms "about," "approximately," "near," etc., mean plus or minus 5% of the stated value. For the purposes of the present disclosure, the phrase "at least one of A, B, and C," for example, means (A), (B), (C), (A and B), (A and C), (B and C), or (A, B, and C), including all further possible permutations when greater than three elements are listed.

The principles, representative embodiments, and modes of operation of the present disclosure have been described in the foregoing description. However, aspects of the present disclosure which are intended to be protected are not to be construed as limited to the particular embodiments disclosed. Further, the embodiments described herein are to be regarded as illustrative rather than restrictive.

## Claims

1. An aircraft landing gear (50), comprising:
a main beam (52) coupled to the aircraft for reciprocating movement between a stowed position and a deployed position; and
an actuator (100) configured to drive the reciprocating movement of the main beam, the actuator comprising:
a ball screw (140);
a motor (110) having an output shaft (112) operably coupled to the ball screw (140) and configured to drive selective rotation of the ball screw (140); and
a disconnect mechanism (300), comprising:
a disconnect fitting (330) rotatably mounted to the ball screw (140); and
a biasing fitting (302) engaging the disconnect fitting (330) to rotate the disconnect fitting (330) between a first position and a second position, wherein the disconnect fitting (330) transfers rotation of the output shaft (112) to the ball screw (140) when the disconnect fitting (330) is in the first position, and the ball screw (140) is isolated from the output shaft (112) when the disconnect fitting (330) is in the second position.

2. The aircraft landing gear (50) of Claim 1, wherein the motor (110) drives rotation of a gear (126) having a splined surface (128), and the disconnect fitting (330) includes an engagement element (338) disposed on an elongate member (332), wherein rotation of the disconnect fitting (330) engages and disengages the engagement element (338) from the splined surface (128).

3. The aircraft landing gear (50) of Claim 2, wherein the elongate member (332) has a first end (334) and a second end (336), the first end (334) and the second end (336) defining an angle therebetween.

4. The aircraft landing gear (50) of Claim 3, wherein the angle is between 100° and 150°.

5. The aircraft landing gear (50) of Claim 3, wherein the biasing fitting (302) is configured for sliding translation along a centerline of the ball screw (140) between a connection position and an isolation position, wherein translation of the biasing fitting (302) from the isolation position to the connection position engages the biasing fitting (302) with the first end (334) of the elongate member (332) to rotate the disconnect fitting (330).

6. The aircraft landing gear (50) of any of Claims 2 through 5, wherein engagement of the biasing fitting (302) with the elongate member (332) when the biasing fitting (302) is in the connection position maintains engagement of the engagement element (338) with the splined surface (128).

7. The aircraft landing gear (50) of any of Claims 3 through 6, wherein translation of the biasing fitting (302) from the connection position to the isolation position engages the biasing fitting (302) with the second end (336) of the elongate member (332) to rotate the disconnect fitting (330).

8. The aircraft landing gear (50) of any of Claims 3 through 7, wherein engagement of the biasing fitting (302) with the second end (336) of the elongate member (332) when the biasing fitting (302) is in the isolation position prevents engagement of the engagement element (338) with the splined surface (128).

9. The aircraft landing gear (50) of any of Claims 5 through 8, wherein the biasing fitting (302) has an ovoid shape.

10. The aircraft landing gear (50) of any of Claims 5 through 8, wherein the biasing fitting (302) is coupled to a first end of a rod (304) slidingly disposed within the ball screw (140) for translational movement along the centerline of the ball screw (140).

11. The aircraft landing gear (50) of any of Claims 5 through 8 or 10, wherein an actuation element (312) is coupled to a second end (336) of the rod (304), the actuation element (312) being configured to move the biasing fitting (302) from the connection position to the isolation position.

12. The aircraft landing gear (50) of Claim 11, wherein the actuation element (312) is a cable.

13. The aircraft landing gear (50) of any of Claims 1 through 11, wherein the disconnect mechanism (300) further comprises a biasing element (356) urging the biasing fitting (302) toward the connection position.

14. The aircraft landing gear (50) of Claim 13, wherein the disconnect mechanism (300) further comprises a locking feature (350) configured to resist the biasing element (356) to maintain the biasing fitting (302) in the isolated position.

15. The aircraft landing gear (50) of Claim 14, wherein the locking feature (350) comprises a locking fitting (354) slidably received within an aperture (352) formed in the rod (304) when the biasing fitting (302) is in the isolated position.

## Patentansprüche

1. Flugzeugfahrwerk (50) umfassend:
einen Hauptträger (52), der für eine Hin- und Herbewegung zwischen einer verstauten Position und einer ausgefahrenen Position mit dem Flugzeug gekoppelt ist; und
einen Aktuator (100), der konfiguriert ist, um die Hin- und Herbewegung des Hauptträgers anzutreiben, wobei der Aktuator umfasst:
eine Kugelumlaufspindel (140);
einen Motor (110), der eine Abtriebswelle (112) aufweist, die betriebsmäßig mit der Kugelumlaufspindel (140) gekoppelt und konfiguriert ist, um eine selektive Drehung der Kugelumlaufspindel (140) anzutreiben; und
einen Trennmechanismus (300), umfassend:
ein Trennpassstück (330), das drehbar an der Kugelumlaufspindel (140) montiert ist; und
ein Vorspannpassstück (302), das mit dem Trennpassstück (330) in Eingriff steht, um das Trennpassstück (330) zwischen einer ersten Position und einer zweiten Position zu drehen, wobei das Trennpassstück (330) die Drehung der Abtriebswelle (112) auf die Kugelumlaufspindel (140) überträgt, wenn sich das Trennpassstück (330) in der ersten Position befindet und die Kugelumlaufspindel (140) von der Abtriebswelle (112) getrennt ist, wenn sich das Trennpassstück (330) in der zweiten Position befindet.

2. Flugzeugfahrwerk (50) nach Anspruch 1, wobei der Motor (110) die Drehung eines Zahnrads (126) mit einer kerbverzahnten Oberfläche (128) antreibt, und das Trennpassstück (330) ein Eingriffselement (338) einschließt, das auf einem länglichen Element (332) angeordnet ist, wobei die Drehung des Trennpassstücks (330) das Eingriffselement (338) mit der kerbverzahnten Oberfläche (128) in Eingriff bringt bzw. davon löst.

3. Flugzeugfahrwerk (50) nach Anspruch 2, wobei das längliche Element (332) ein erstes Ende (334) und ein zweites Ende (336) aufweist, wobei das erste Ende (334) und das zweite Ende (336) einen Winkel zwischen sich definieren.

4. Flugzeugfahrwerk (50) nach Anspruch 3, wobei der Winkel zwischen 100° und 150° liegt.

5. Flugzeugfahrwerk (50) nach Anspruch 3, wobei das Vorspannpassstück (302) zum Gleiten entlang einer Mittellinie der Kugelumlaufspindel (140) zwischen einer Verbindungsposition und einer Isolationsposition konfiguriert ist, wobei eine Translation des Vorspannpassstücks (302) von der Isolationsposition in die Verbindungsposition das Vorspannpassstück (302) mit dem ersten Ende (334) des länglichen Elements (332) in Eingriff bringt, um das Trennpassstück (330) zu drehen.

6. Flugzeugfahrwerk (50) nach einem der Ansprüche 2 bis 5, wobei der Eingriff des Vorspannpassstücks (302) mit dem länglichen Element (332), wenn sich das Vorspannpassstück (302) in der Verbindungsposition befindet, den Eingriff des Eingriffselements (338) mit der kerbverzahnten Oberfläche (128) aufrechterhält.

7. Flugzeugfahrwerk (50) nach einem der Ansprüche 3 bis 6, wobei die Translation des Vorspannpassstücks (302) von der Verbindungsposition in die Isolationsposition das Vorspannpassstück (302) mit dem zweiten Ende (336) des länglichen Elements (332) in Eingriff bringt, um das Trennpassstück (330) zu drehen.

8. Flugzeugfahrwerk (50) nach einem der Ansprüche 3 bis 7, wobei der Eingriff des Vorspannpassstücks (302) mit dem zweiten Ende (336) des länglichen Elements (332), wenn sich das Vorspannpassstück (302) in der Isolationsposition befindet, den Eingriff des Eingriffselements (338) mit der kerbverzahnten Oberfläche (128) verhindert.

9. Flugzeugfahrwerk (50) nach einem der Ansprüche 5 bis 8, wobei das Vorspannpassstück (302) eine ovale Form aufweist.

10. Flugzeugfahrwerk (50) nach einem der Ansprüche 5 bis 8, wobei das Vorspannpassstück (302) mit einem ersten Ende einer Stange (304) gekoppelt ist, die gleitend in der Kugelumlaufspindel (140) für eine Translationsbewegung entlang der Mittellinie der Kugelumlaufspindel (140) angeordnet ist.

11. Flugzeugfahrwerk (50) nach einem der Ansprüche 5 bis 8 oder 10, wobei ein Betätigungselement (312) mit einem zweiten Ende (336) der Stange (304) gekoppelt ist, wobei das Betätigungselement (312) konfiguriert ist, um das Vorspannpassstück (302) aus der Verbindungsposition in die Isolationsposition zu bewegen.

12. Flugzeugfahrwerk (50) nach Anspruch 11, wobei das Betätigungselement (312) ein Kabel ist.

13. Flugzeugfahrwerk (50) nach einem der Ansprüche 1 bis 11, wobei der Trennmechanismus (300) weiter ein Vorspannelement (356) umfasst, das das Vorspannpassstück (302) in Richtung der Verbindungsposition drückt.

14. Flugzeugfahrwerk (50) nach Anspruch 13, wobei der Trennmechanismus (300) weiter ein Verriegelungsmerkmal (350) umfasst, das konfiguriert ist, um dem Vorspannelement (356) Widerstand zu leisten, um das Vorspannpassstück (302) in der isolierten Position zu halten.

15. Flugzeugfahrwerk (50) nach Anspruch 14, wobei das Verriegelungsmerkmal (350) ein Verriegelungspassstück (354) umfasst, das gleitbar in einer in der Stange (304) ausgebildeten Öffnung (352) aufgenommen ist, wenn sich das Vorspannpassstück (302) in der isolierten Position befindet.

## Revendications

1. Train d'atterrissage d'aéronef (50) comprenant :
une poutre principale (52) couplée à l'aéronef pour un mouvement alternatif entre une position rangée et une position déployée ; et
un actionneur (100) configuré pour entraîner le mouvement alternatif de la poutre principale, l'actionneur comprenant :
une vis à billes (140) ;
un moteur (110) présentant un arbre de sortie (112) couplé fonctionnellement à la vis à billes (140) et configuré pour entraîner la rotation sélective de la vis à billes (140) ; et
un mécanisme de déconnexion (300), comprenant :
un dispositif de déconnexion (330) monté de manière rotative sur la vis à billes (140) ; et
un dispositif de sollicitation (302) se mettant en prise avec le dispositif de déconnexion (330) pour faire tourner le dispositif de déconnexion (330) entre une première position et une seconde position, dans lequel le dispositif de déconnexion (330) transfère la rotation de l'arbre de sortie (112) à la vis à billes (140) lorsque le dispositif de déconnexion (330) est dans la première position, et la vis à billes (140) est isolée de l'arbre de sortie (112) lorsque le dispositif de déconnexion (330) est dans la seconde position.

2. Train d'atterrissage d'aéronef (50) selon la revendication 1, dans lequel le moteur (110) entraîne la rotation d'un engrenage (126) présentant une surface cannelée (128), et le dispositif de déconnexion (330) inclut un élément de mise en prise (338) disposé sur un élément allongé (332), dans lequel la rotation du dispositif de déconnexion (330) met l'élément de mise en prise (338) en prise avec et hors prise de la surface cannelée (128).

3. Train d'atterrissage d'aéronef (50) selon la revendication 2, dans lequel l'élément allongé (332) présente une première extrémité (334) et une seconde extrémité (336), la première extrémité (334) et la seconde extrémité (336) définissant un angle entre elles.

4. Train d'atterrissage d'aéronef (50) selon la revendication 3, dans lequel l'angle est compris entre 100° et 150°.

5. Train d'atterrissage d'aéronef (50) selon la revendication 3, dans lequel le dispositif de sollicitation (302) est configuré pour une translation coulissante le long d'une ligne centrale de la vis à billes (140) entre une position de connexion et une position d'isolation, dans lequel la translation du dispositif de sollicitation (302) de la position d'isolation à la position de connexion met en prise le dispositif de sollicitation (302) avec la première extrémité (334) de l'élément allongé (332) pour faire tourner le dispositif de déconnexion (330).

6. Train d'atterrissage d'aéronef (50) selon l'une quelconque des revendications 2 à 5, dans lequel la mise en prise du dispositif de sollicitation (302) avec l'élément allongé (332) lorsque le dispositif de sollicitation (302) est en position de connexion maintient la mise en prise de l'élément de mise en prise (338) avec la surface cannelée (128).

7. Train d'atterrissage d'aéronef (50) selon l'une quelconque des revendications 3 à 6, dans lequel la translation du dispositif de sollicitation (302) de la position de connexion à la position d'isolation met en prise le dispositif de sollicitation (302) avec la seconde extrémité (336) de l'élément allongé (332) pour faire tourner le dispositif de déconnexion (330).

8. Train d'atterrissage d'aéronef (50) selon l'une quelconque des revendications 3 à 7, dans lequel la mise en prise du dispositif de sollicitation (302) avec la seconde extrémité (336) de l'élément allongé (332) lorsque le dispositif de sollicitation (302) est en position d'isolation empêche la mise en prise de l'élément de mise en prise (338) avec la surface cannelée (128).

9. Train d'atterrissage d'aéronef (50) selon l'une quelconque des revendications 5 à 8, dans lequel le dispositif de sollicitation (302) présente une forme ovoïde.

10. Train d'atterrissage d'aéronef (50) selon l'une quelconque des revendications 5 à 8, dans lequel le dispositif de sollicitation (302) est couplé à une première extrémité d'une tige (304) disposée de manière coulissante à l'intérieur de la vis à billes (140) pour un mouvement de translation le long de l'axe central de la vis à billes (140).

11. Train d'atterrissage d'aéronef (50) selon l'une quelconque des revendications 5 à 8 ou 10, dans lequel un élément d'actionnement (312) est couplé à une seconde extrémité (336) de la tige (304), l'élément d'actionnement (312) étant configuré pour déplacer le dispositif de sollicitation (302) de la position de connexion à la position d'isolation.

12. Train d'atterrissage d'aéronef (50) selon la revendication 11, dans lequel l'élément d'actionnement (312) est un câble.

13. Train d'atterrissage d'aéronef (50) selon l'une quelconque des revendications 1 à 11, dans lequel le mécanisme de déconnexion (300) comprend en outre un élément de sollicitation (356) poussant le dispositif de sollicitation (302) vers la position de connexion.

14. Train d'atterrissage d'aéronef (50) selon la revendication 13, dans lequel le mécanisme de déconnexion (300) comprend en outre un dispositif de verrouillage (350) configuré pour résister à l'élément de sollicitation (356) afin de maintenir le dispositif de sollicitation (302) en position isolée.

15. Train d'atterrissage d'aéronef (50) selon la revendication 14, dans lequel l'élément de verrouillage (350) comprend un dispositif de verrouillage (354) coulissant à l'intérieur d'une ouverture (352) formée dans la tige (304) lorsque le dispositif de sollicitation (302) est en position isolée.
